# EUROPEAN PATENT SPECIFICATION

(11) **EP 3 838 623 B1**
(45) Date of publication and mention of the grant of the patent: **07.06.2023**
(21) Application number: 20214125.5
(22) Date of filing: 15.12.2020
(51) Int. Cl.: B60C 9/20

(54) **TRUCK TIRE**
LASTWAGENREIFEN
PNEUMATIQUE DE CAMION

(30) Priority: 17.12.2019 US 201962949039 P; 09.10.2020 US 202017067003
(43) Date of publication of application: 23.06.2021
(60) Divisional application: 23156172.1
(73) Proprietor: The Goodyear Tire & Rubber Company, Akron, OH 44316 (US)
(72) Inventor: PASSANTE SPACCAPIETRA, Ettore, L-9070 Ettelbruck (LU); MULLER, Philippe Joseph Auguste, B-6971 Champlon (BE); WINKIN, Didier, B-6600 Bastogne (BE); COCCON, Marco Nicolo, L-2230 Luxembourg (LU); MANOGARAN, Arun Prasath, L-8715 Everlange (LU); KRIER, Roland Willibrord, L-6622 Wasserbillig (LU); NAWALE, Vaibhav, L-8710 Boevange-sur-Attert (LU)
(74) Representative: Kutsch, Bernd

(56) References cited:
- EP-A1- 1 787 825
- WO-A1-2011/131383
- JP-A- 2009 018 629
- US-A1- 2016 152 080

## Description

### Field of Invention

The invention relates in general to pneumatic tires, and more particularly for vehicles such as trucks.

### Background of the Invention

The commercial truck market is moving towards an increase in overall vehicle weight, which is due in part to the increase in weight of the motor and equipment. The increase in overall vehicle weight requires a tire capable of handling the additional loading. Thus, a tire with improved crown durability and increased load carrying capacity is desired.

JP 2009 018629 A discloses a tire in accordance with the preamble of claim 1.

US 2019/152080 A1 discloses a pneumatic tire having crossed working belt, a circumferential belt between the crossed working belts, a protective belt layer on top of the crossed working belts and a split belt structure laterally adjacent the protective belt layer. A similar construction is aso known from EP 1 787 825 A1.

### Summary of the Invention

The invention relates to a tire in accordance with claim 1.

Dependent claims refer to preferred embodiments of the invention.

In a first preferred aspect of the invention, a pneumatic tire for use on trucks is provided, the tire comprising a tread and a belt structure located radially inward of the tread, the belt structure including a pair of working belts, wherein the working belts are reinforced plies each comprising parallel reinforcement elements, wherein the angle of the reinforcement elements in the respective working belt ranges from 12 degrees to 35 degrees from the circumferential direction, wherein the belt structure further includes a belt positioned between the working belts comprising parallel reinforcement elements angled at less than 5 degrees from the circumferential direction, and wherein there is a split belt which is the radially outermost belt, and is positioned radially inward of a groove of the tread.

In a preferred aspect of the invention, the working belts are formed of extensible reinforcement elements having an elongation at 10% of the breaking load greater than 0.2% when measured at the reinforcement elements extracted from a cured tire. Preferably, the extensible reinforcement elements are wires comprising steel or hybrid cords formed of high elongation wire having a % elongation at 10% of breaking load greater than 0.4% when taken from wire from a cured tire.

### Definitions

"Aspect Ratio" means the ratio of a tire's section height to its section width.

"Axial" and "axially" mean the lines or directions that are parallel to the axis of rotation of the tire.

"Belt Structure" or "Reinforcing Belts" or "Belt Package" means at least two annular layers or plies of parallel cords, woven or unwoven, underlying the tread, unanchored to the bead.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Circumferential" means lines or directions perpendicular to the axial direction.

"Cord" means one of the reinforcement strands, including fibers, which are used to reinforce the plies.

"Extensible" means a cable, cord, wire or reinforcement having an elongation at 10% of the breaking load greater than 0.2%, when measured from a cord extracted from a cured tire.

"Ply" means a cord-reinforced layer of elastomer-coated, radially deployed or otherwise parallel cords.

"Radial" and "radially" mean directions radially toward or away from the axis of rotation of the tire.

"Tread Arc Width" means the arc length of the tread as measured between the radially outermost lateral edges of the tread.

### Brief Description of the Drawings

The invention will be described by way of example and with reference to the accompanying drawings in which:
FIG. 1 is a cross-sectional view of a first embodiment of a tire of the present invention; and
FIG. 2 is a close-up view of the belt package of the tire of FIG. 1.

### Detailed Description of Example Embodiments the Invention

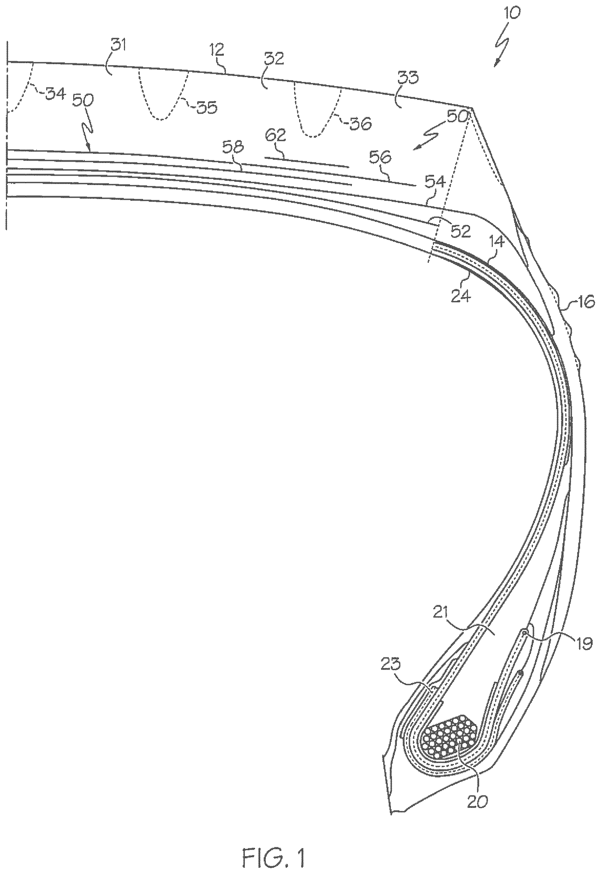

Figure 1 illustrates a first embodiment of a pneumatic tire suitable for use as a truck tire. The tire 10 has a tread 12 with a non-skid depth D. The tire tread 12 preferably comprises a plurality of circumferentially continuous ribs, which may vary, but are shown for example as ribs 31, 32 and 33. Positioned between each rib is a circumferential groove 34, 35, 36, which are preferably continuous. The tread may also comprise optional sipes (not shown). The tread pattern is not limited to same, and may comprise, for example, a plurality of blocks and grooves (not shown).

The tire 10 further comprises a casing 14 which includes two opposed sidewalls 16 which extend down from the tread 12 to the bead area. The casing 14 of the tire 10 preferably further includes an inner liner 24 which is typically formed of halobutyl rubber which forms an air impervious barrier. The tire casing 14 further includes one or more radial plies 18 extending from the tread, down the sidewall to the tire bead 20. Preferably, the radial ply 18 is wrapped about or otherwise secured to each annular bead 20. In the preferred embodiment illustrated, there is only one ply 18 and it is wrapped around the bead in an inside out manner such that the ply ending 19 is located axially outward and radially outwards of the bead. The beads 20 may be any desired shape, but in this embodiment, it is shown as a hexagonal configuration with steel filaments.

The tire preferably further includes an apex 21 which is preferably shaped like a triangle. The ply turnup in the bead area is preferably reinforced with a chipper 23 wrapped about the bead ply 18.

The tire 10 further includes a belt package 50 which is located between the tread and the one or more plies 18. The belt package comprises layers of reinforcement. The ply 18 and the belt reinforcing structure 50 are preferably made from cord reinforced elastomeric material, wherein the cords are typically steel wire or polyamide filaments and the elastomer preferably being rubber.

The belt reinforcing package 50 may include an optional radially inner or innermost transition belt 52. The transition belt 52 may be the narrowest belt of the structure 50. The transition belt 52 has an axial belt width which preferably ranges from 0.6 to 0.9 or 0.65 to 0.85 of the tread arc width. The transition belt 52 preferably has an orientation that has an angle of between 45 to 70 degrees, preferably right. The transition belt 52 is preferably made of ultra tensile steel with a construction of 3+2x0.35.

The belt reinforcing structure 50 further includes a pair of working belts, 54, 56. The first working belt 54 is located radially inwards of the second working belt 56 and is preferably the axially widest belt layer of the belt reinforcing structure 50.

The first working belt 54 has a width which is preferably equal or, about equal, i.e. ± 5%, to the tread arc width. The breaker angle of belt 54 is between 16 and 30 degrees, preferably with a right orientation, more preferably in the range of 19 to 25 degrees.

Belt 54 is preferably made of high elongation wire, which is has a % elongation at 10% of breaking load of greater than 0.4%, alternatively greater than 0.6% or 0.8%, as measured from a cord taken from a cured tire. Alternatively, the cable has a % elongation at 10% of breaking load of greater than 1.7 % when measurement is performed on a bare wire sample that has not been vulcanized in a tire.

For example, the working belt 54 may be formed of wire having a wire construction of 3x7x, 3x4x, 4x4x. Preferably the wire has a construction of 3x7x0.22 HE (HE = high elongation steel wire). The number of ends per 2.54 cm (EPI) in the working belt 54 is preferably in a range of from 8 to 14. The wire may be a hybrid cord or a steel wire.

The second working belt 56 is the second member of the working belt pair. The second working belt 56 preferably has a width less than the width of the first working belt 54 and is preferably radially outward of the first working belt 54. Preferably, the second working belt 56 has a width less than the width of belt 54 by a step off, which is preferably in a range of from 10 mm to 20 mm.

Working belt 56 has a breaker angle between 12 and 35 degrees, preferably with a left orientation, more preferably in the range of 19 to 25 degrees.

Working belt 56 is preferably made of high elongation wire. Preferably, the high elongation wire is the same as the wire of the first working belt 54. More preferably, the wire has the same construction with the same but opposite angular orientation as the wire of working belt 54.

The belt structure 50 further comprises a fourth belt 58 which is preferably located between the working pair belts, 54, 56. The fourth belt 58 has reinforcements that are oriented circumferentially at 5 degrees or less, preferably 2 degrees or less, more preferably at 0 degrees or about 0 degrees. The fourth belt 58 has a belt width preferably less than the belt width of the working belts 54, 56.

The fourth belt 58 is preferably formed from spirally winding a rubberized strip of one or more cords. Preferably, the strip has 3, 4 or 5 steel cords, and has a width in the range of 5-10 mm, more preferably 4-6 mm. The belt 58 has a width sized to avoid compression in the shoulder area. The belt width of fourth belt 58 is preferably in the range of 70% to 80% of the tread arc width, and even more preferably in the range of 73 to 77%. The fourth belt 58 is preferably wide enough to decrease the strain cycles in the breaker wedge and is just stopped before the shoulder area to avoid zero degree wire compression and a too round footprint.

The belt structure of fourth belt 58 is preferably formed of high tensile steel and preferably has a % elongation at 10% of breaking load of 0.18 or more, for measurements taken from a cured tire. For measurements taken from bare cords, the % elongation at 10% of breaking load is 0.2 or more. Alternatively, the fourth belt may be formed of non-metal reinforcements such as aramid, carbon fiber, or polyketone or POK.

The belt package 50 further includes a split belt formed of a first and second split belt structure 62, located on each side of the tire 10 and having a relatively narrow axial width to be positioned radially inward of the axially outermost shoulder groove. The split belt preferably is the narrowest belt and is the radially outermost belt of the belt reinforcement structure 50.

Thus, the split belt is formed of a first split belt structure and second split belt structure, and wherein the first and second split belt structure 62 are each positioned radially inward of an axially outermost groove on each side of the tread and each extend at least partially below said axially outermost groove on each side of the tread. The first and second split belt structure 62 are axially spaced from each other.

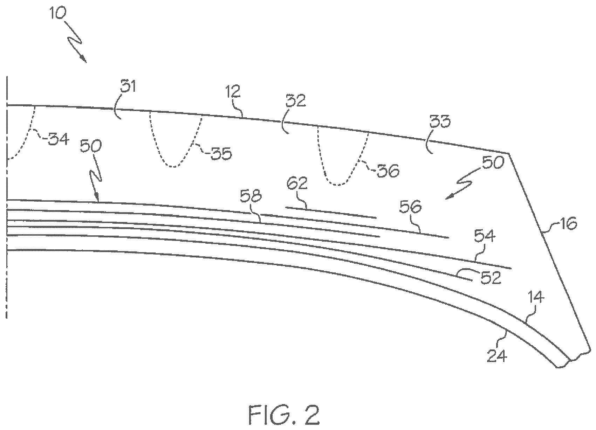

As shown in Fig. 1 and 2, the split belt structure has a width greater than or equal to the axial width of the groove and sufficient to be positioned radially inward of the axially outermost shoulder groove 36 on each side of the tire. The axial width of the split belt structure 62 is in the range of 1 to 2 times the maximum axial width of the groove.

Preferably, each of the split belt structures 62 of the split belt has the same angle and orientation as the adjacent working belt 56.

The aspect ratio of the tire 10 described above may vary. The aspect ratio is preferably in the range of from 0.4 to 0.6.

The tire preferably has a net to gross ratio in the range of from 0.70 to 0.90, more preferably in the range of 0.74 to 0.86, more preferably a 0.78 to 0.84.

## Claims

1. A pneumatic tire the tire comprising a tread (12) and a belt package (50) located radially inward of the tread (12), the belt package (50) including a pair of working belts (54, 56), wherein the working belts (54, 56) are reinforced plies each comprising parallel reinforcement elements, wherein the angle of the reinforcement elements in the respective working belt (54, 56) is in a range of from 12 degrees to 35 degrees with respect to the circumferential direction, wherein the belt package (50) includes a further belt (58) positioned between the working belts (54, 56), said further belt (58) comprising parallel reinforcement elements angled in a range of from 5 degrees to 0 degree with respect to the circumferential direction, and wherein there is also a split belt formed of a first split belt structure and second split belt structure (62), and wherein the first and second split belt structure (62) are each positioned radially inward of an axially outermost groove (36) on each side of the tread (12) and each extend at least partially below said axially outermost groove (36) on each side of the tread (12), **characterized in that** the axial width of each of the first and second split belt structures (62) is a range of 1 to 2 times the maximum axial width of the respective axially outermost groove (36) located radially outward of the respective first and second split belt structure (62) and **in that** the split belt is the radially outermost belt of the belt package (50).

2. The tire of claim 1 wherein each of the first and second split belt structure (62) has an axial width in a range of from 1.1 to 1.5 times the maximum axial width of the respective axially outermost groove (36) located radially outward of the respective first and second split belt structure (62).

3. The tire of claim 1 or 2 wherein the reinforcement elements in the working belts (54, 56) have an elongation at 10% of the breaking load greater than 0.2 % when measured at reinforcement elements extracted from a cured tire.

4. The tire of claim 1 or 3 wherein the reinforcement elements in the working belts (54, 56) are wires comprising steel or hybrid cords.

5. The tire of at least one of the previous claims wherein the axial width of each of the first and second split belt structures (62) is less than 1/3, preferably less than 20 percent, of the tread arc width.

6. The tire of at least one of the previous claims wherein the reinforcement elements in the working belts (54, 56) have an elongation at 10% of the breaking load greater than 0.4 % when measured at reinforcement elements extracted from a cured tire.

7. The tire of at least one of the previous claims wherein the reinforcement elements in the working belts (54, 56) have an elongation at 10% of the breaking load greater than 0.8 % or greater than 1.5 % when measured at reinforcement elements extracted from a cured tire.

8. The tire of at least one of the previous claims wherein the radially inner belt (54) of the pair of working belts (54, 56) has an axial width equal or about equal to the tread arc width or an axial width in a range of from 90 percent to 110 percent or 95 to 105 percent of the tread arc width.

9. The tire of at least one of the previous claims wherein the radially outer belt (56) of the pair of working belts (54, 56) has an axial width less than the axial width of the radially inner working belt (54) and/or wherein the radially inner working belt (54) is the axially widest belt of all belts of the belt structure (50).

10. The tire of at least one of the previous claims wherein the further belt (58) comprising parallel reinforcement elements angled in a range of from 5 degrees to 0 degree with respect to the circumferential direction has an axial width in a range of from 70 to 80 percent of the tread arc width and/or an axial width less than the axial width of the first working belt and the second working belt (54, 56).

11. The tire of at least one of the previous claims further including a transition belt (52) located radially inwards of the working belts (54, 56).

12. The tire of claim 11 wherein the transition belt (52) comprises parallel reinforcement elements having an angle in a range of from 45 to 70 degrees from the circumferential direction, preferably an angle in a range of from 45 to 70 degrees right.

13. The tire of claim 11 or 12 wherein the transition belt (52) has an axial width of from 60 to 80 percent of the tread arc width.

14. The tire of at least one of the previous claims wherein the aspect ratio of the tire is 0.6 or less.

15. The tire of at least one of the previous claims wherein the tire (10) is a truck tire.

## Patentansprüche

1. Luftreifen, wobei der Luftreifen eine Lauffläche (12) und ein radial innen der Lauffläche (12) angeordnetes Gürtelpaket (50) umfasst, wobei das Gürtelpaket (50) ein Paar von Arbeitsgürteln (54, 56) enthält, wobei die Arbeitsgürtel (54, 56) verstärkte Lagen sind, die jeweils parallele Verstärkungselemente umfassen, wobei der Winkel der Verstärkungselemente in dem jeweiligen Arbeitsgürtel (54, 56) in einem Bereich von 12 Grad bis 35 Grad in Bezug zur Umfangsrichtung liegt, wobei das Gürtelpaket (50) einen zwischen den Arbeitsgürtel (54, 56) angeordneten weiteren Gürtel (58) enthält, wobei der besagte Gürtel parallele Verstärkungselemente umfasst, die in einem Bereich von 5 Grad bis 0 Grad zur Umfangsrichtung abgewinkelt sind, und wobei es auch einen geteilten Gürtel gibt, der aus einer ersten Teilgürtelstruktur und einer zweiten Teilgürtelstruktur (62) gebildet ist, und wobei die erste und zweite Teilgürtelstruktur (62) jeweils radial nach innen einer axial äußersten Rille (36) auf jeder Seite der Lauffläche (12) angeordnet sind und sich jeweils zumindest teilweise unterhalb der axial äußersten Rille (36) auf jeder Seite der Lauffläche (12) erstrecken, **dadurch gekennzeichnet, dass** die axiale Breite jeder der ersten und zweiten Teilgürtelstrukturen (62) ein Bereich von 1- bis 2 mal der maximalen axialen Breite der jeweiligen axial äußersten Rille (36) ist, die radial außerhalb der jeweiligen ersten und zweiten Teilgürtelstruktur (62) angeordnet ist, und dass der geteilte Gürtel der radial äußerste Gürtel des Gürtelpakets (50) ist.

2. Reifen nach Anspruch 1, wobei jede der ersten und zweiten Teilgürtelstrukturen (62) eine axiale Breite in einem Bereich von 1,1 bis 1,5 mal der maximalen axialen Breite der jeweiligen axial äußersten Rille (36) hat, die radial außerhalb der jeweiligen ersten und zweiten Teilgürtelstruktur (62) angeordnet ist.

3. Reifen nach Anspruch 1 oder 2, wobei die Verstärkungselemente in den Arbeitsgürteln (54, 56) eine Dehnung, bei 10% der Bruchlast, größer als 0,2% haben, wenn sie an aus einem vulkanisierten Reifen entnommenen Verstärkungselementen gemessen wird.

4. Reifen nach Anspruch 1 oder 3, wobei die Verstärkungselemente in den Arbeitsgürteln (54, 56) Drähte sind, die Stahl- oder Hybridkorde umfassen.

5. Reifen nach mindestens einem der vorhergehenden Ansprüche, wobei die axiale Breite jeder der ersten und zweiten Teilgürtelstrukturen (62) kleiner als 1/3, vorzugsweise kleiner als 20 Prozent der Profilbogenbreite ist.

6. Reifen nach mindestens einem der vorhergehenden Ansprüche, wobei die Verstärkungselemente in den Arbeitsgürteln (54, 56) eine Dehnung, bei 10% der Bruchlast, größer als 0,4% haben, wenn sie an aus einem vulkanisierten Reifen entnommenen Verstärkungselementen gemessen wird.

7. Reifen nach mindestens einem der vorhergehenden Ansprüche, wobei die Verstärkungselemente in den Arbeitsgürteln (54, 56) eine Dehnung, bei 10% der Bruchlast, größer als 0,8 % oder größer als 1,5 % haben, wenn sie an aus einem vulkanisierten Reifen entnommenen Verstärkungselementen gemessen wird.

8. Reifen nach mindestens einem der vorhergehenden Ansprüche, wobei der radial innere Gürtel (54) des Arbeitsgürtelpaares (54, 56) eine axiale Breite hat, die gleich oder etwa gleich der Laufflächenbogenbreite ist oder eine axiale Breite, die sich in einem Bereich von 90 Prozent bis 110 Prozent oder 95 bis 105 Prozent der Laufflächenbogenbreite befindet.

9. Reifen nach mindestens einem der vorhergehenden Ansprüche, wobei der radial äußere Gürtel (56) des Arbeitsgürtelpaares (54, 56) eine axiale Breite hat, die kleiner als die axiale Breite des radial inneren Arbeitsgürtels (54) ist und/oder wobei der radial innere Arbeitsgürtel (54) der axial breiteste Gürtel aller Gürtel der Gürtelstruktur (50) ist.

10. Reifen nach mindestens einem der vorhergehenden Ansprüche, wobei der weitere Gürtel (58), der parallelen Verstärkungselemente umfasst, die in einem Bereich von 5 Grad bis 0 Grad zur Umfangsrichtung abgewinkelt sind, eine axiale Breite im Bereich von 70 bis 80 Prozent der Laufflächenbogenbreite hat und/oder eine axiale Breite, die kleiner als die axiale Breite des ersten Arbeitsgürtels und des zweiten Arbeitsgürtels (54, 56) ist.

11. Reifen nach mindestens einem der vorhergehenden Ansprüche, der einen Übergangsgürtel (52), der radial nach innen der Arbeitsgürtel (54, 56) angeordnet ist, weiterhin umfasst.

12. Reifen nach Anspruch 11, wobei der Übergangsgürtel (52) parallele Verstärkungselemente umfasst, die einen Winkel in einem Bereich von 45 bis 70 Grad von der Umfangsrichtung, vorzugsweise einen Winkel in einem Bereich von 45 bis 70 Grad rechts haben.

13. Reifen nach Anspruch 11 oder 12, wobei der Übergangsgürtel (52) eine axiale Breite von 60 bis 80 Prozent der Profilbogenbreite hat.

14. Reifen nach mindestens einem der vorhergehenden Ansprüche, wobei das Aspektverhältnis des Reifens 0,6 oder weniger beträgt.

15. Reifen nach mindestens einem der vorhergehenden Ansprüche, wobei der Reifen (10) ein LKW-Reifen ist.

## Revendications

1. Bandage pneumatique, dans lequel le bandage pneumatique comprend une bande de roulement (12) et un paquet de ceintures (50) qui est disposé dans la direction radiale à l'intérieur de la bande de roulement (12), le paquet de ceintures (50) englobant une paire de ceintures de travail (54, 56) dans lequel les ceintures de travail (54, 56) représentent des nappes renforcées qui comprennent chacune des éléments de renforcement parallèles, dans lequel l'angle formé par les éléments de renforcement dans la ceinture de travail respective (54, 56) se situe dans une plage allant de 12 degrés à 35 degrés par rapport à la direction circonférentielle, dans lequel le paquet de ceintures (50) englobe une ceinture supplémentaire (58) qui est disposée entre les ceintures de travail (54, 56), ladite ceinture supplémentaire (58) comprenant des éléments de renforcement parallèles qui forment un angle situé dans une plage allant de 5 degrés à 0 degrés par rapport à la direction circonférentielle, et dans lequel on trouve également une ceinture en deux parties formée à partir d'une première structure de la ceinture en deux parties et d'une deuxième structure de la ceinture en deux parties (62), et dans lequel la première et la deuxième structure de la ceinture en deux parties (62) sont chacune disposées dans la direction radiale à l'intérieur d'une rainure la plus externe en direction axiale (36) de chaque côté de la bande de roulement (12) et chacune s'étend au moins en partie en dessous de ladite rainure la plus externe en direction axiale (36) de chaque côté de la bande de roulement (12), **caractérisé en ce que** la largeur axiale de chacune de ladite première et de ladite deuxième structure de la ceinture en deux parties (62) représente une plage qui correspond à une valeur qui représente de 1 à 2 fois la largeur axiale maximale de la rainure respective la plus externe en direction axiale (36) qui est disposée dans la direction radiale à l'extérieur de la première et de la deuxième structure de la ceinture en deux parties respectives(62), et **en ce que** la ceinture en deux parties représente la ceinture la plus externe en direction radiale, du paquet de ceintures (50).

2. Bandage pneumatique selon la revendication 1, dans lequel chacune de ladite première et de ladite deuxième structure de la ceinture en deux parties (62) possède une largeur axiale qui se situe dans une plage qui représente de 1,1 à 1,5 fois la largeur axiale maximale de la rainure respective la plus externe en direction axiale (36) qui est disposée à l'extérieur de la première et de la deuxième structure de la ceinture en deux parties (62).

3. Bandage pneumatique selon la revendication 1 ou 2, dans lequel les éléments de renforcement dans les ceintures de travail (54, 56) possèdent un allongement, à 10 % de la charge de rupture, qui est supérieur à 0,2 %, lorsqu'on le mesure à des éléments de renforcement qui ont été extraits à partir d'un bandage pneumatique qui a été vulcanisé.

4. Bandage pneumatique selon la revendication 1 ou 3, dans lequel les éléments de renforcement dans les ceintures de travail (54, 56) sont des fils métalliques qui comprennent des câblés en acier ou des câblés hybrides.

5. Bandage pneumatique selon au moins une des revendications précédentes, dans lequel la largeur axiale de chacune de la première et de la deuxième structure de la ceinture en deux parties (62) est inférieure à 1/3, de préférence représente moins de 20 % de la largeur d'arc de la bande de roulement.

6. Bandage pneumatique selon au moins une des revendications précédentes, dans lequel les éléments de renforcement dans les ceintures de travail (54, 56) possèdent un allongement, à 10 % de la charge de rupture, qui est supérieur à 0,4 %, lorsqu'on le mesure à des éléments de renforcement qui ont été extraits d'un bandage pneumatique vulcanisé.

7. Bandage pneumatique selon au moins une des revendications précédentes, dans lequel les éléments de renforcement dans les ceintures de travail (54, 56) possèdent un allongement, à 10 % de la charge de rupture, qui est supérieur à 0,8 % ou supérieur à 1,5 %, lorsqu'on le mesure à des éléments de renforcement qui ont été extraits d'un bandage pneumatique vulcanisé.

8. Bandage pneumatique selon au moins une des revendications précédentes, dans lequel la ceinture interne en direction radiale (54) de la paire de ceintures de travail (54, 56) possède une largeur axiale qui est égale ou approximativement égale à la largeur d'arc de la bande de roulement ou une largeur axiale qui se situe dans une plage qui représente de 90 % à 110 % ou de 95 à 105 % de la largeur d'arc de la bande de roulement.

9. Bandage pneumatique selon au moins une des revendications précédentes, dans lequel la ceinture externe en direction radiale (56) de la paire de ceintures de travail (54, 56) possède une largeur axiale qui est inférieure à la largeur axiale de la ceinture de travail interne en direction radiale (54) et/ou dans lequel la ceinture travail interne en direction radiale (54) représente la ceinture le plus large en direction axiale de la totalité des ceintures de la structure de ceintures (50).

10. Bandage pneumatique selon au moins une des revendications précédentes, dans lequel la ceinture supplémentaire (58) comprenant des éléments de renforcements parallèles qui forment un angle dans une plage allant de 5 degrés à 0 degré par rapport à la direction circonférentielle, possède une largeur axiale qui se situe dans une plage qui représente de 70 à 80 % de la largeur d'arc de la bande de roulement et/ou une largeur axiale qui est inférieure à la largeur axiale de la première ceinture de travail et de la deuxième ceinture de travail (54, 56).

11. Bandage pneumatique selon au moins une des revendications précédentes, qui englobe en outre une ceinture de transition (52) qui est disposée dans la direction radiale à l'intérieur des ceintures de travail (54, 56).

12. Bandage pneumatique selon la revendication 11, dans lequel la ceinture de transition (50) comprend des éléments de renforcement parallèles qui forment un angle situé dans une plage allant de 45 à 70 degrés par rapport à la direction circonférentielle, de préférence un angle qui se situe dans une plage allant de 45 à 70 degrés à droite.

13. Bandage pneumatique selon la revendication 11 ou 12, dans lequel la ceinture de transition (52) possède une largeur axiale qui représente de 60 à 80 % de la largeur d'arc la bande de roulement.

14. Bandage pneumatique selon au moins une des revendications précédentes, dans lequel le rapport nominal d'aspect du bandage pneumatique s'élève à 0,6 ou moins.

15. Bandage pneumatique selon au moins une des revendications précédentes, dans lequel le bandage pneumatique (10) est un bandage pneumatique destiné à un camion.
